# EUROPÄISCHE PATENTSCHRIFT

(11) **EP 2 060 003 B1**
(45) Veröffentlichungstag und Bekanntmachung des Hinweises auf die Patenterteilung: **31.10.2018**
(21) Anmeldenummer: 06791370.7
(22) Anmeldetag: 07.09.2006
(51) Int. Cl.: H02P 9/10

(54) **EINRICHTUNG ZUR DÄMPFUNGSREGELUNG**
DEVICE FOR DAMPING REGULATION
DISPOSITIF DE REGULATION DE L'AMORTISSEMENT

(43) Veröffentlichungstag der Anmeldung: 20.05.2009
(73) Patentinhaber: Siemens Aktiengesellschaft, 80333 München (DE)
(72) Erfinder: RITTIGER, Jürgen, 91074 Herzogenaurach (DE)
(86) Internationale Anmeldenummer: PCT/DE2006/001600
(87) Internationale Veröffentlichungsnummer: WO 2008/028436

(56) Entgegenhaltungen:
- EP-A- 1 507 331
- WO-A-98/21924
- DE-A1- 3 019 952
- US-A1- 2006 232 250

## Beschreibung

Die Erfindung betrifft eine Einrichtung zur Dämpfungsregelung mechanischer Torsionsschwingungen eines elektrischen Wechselstromgenerators eines Drehstromnetzes, an welches ein mit einem Stromregler und einer Steuereinrichtung versehener Stromrichter einer HGÜ-Anlage angeschlossen ist, mit einer Mess- und Filtereinrichtung zur Erfassung eines Torsionsschwingungsfrequenzen des Wechselstromgenerators enthaltenden Messsignals und einer der Mess- und Filtereinrichtung nachgeordneten Korrekturvorrichtung zur Korrektur eines Steuersignals für die Steuereinrichtung des Stromrichters der HGÜ-Anlage.

Eine solche Einrichtung ist aus der deutschen Patentschrift DE 30 19 952 C2 bekannt. Die offenbarte Einrichtung ist vorgesehen zur Dämpfung von mechanischen Torsionsschwingungen eines an einem Drehstromnetz angeschlossenen Wechselstromgenerators, wobei die Torsionsschwingungen durch einen ebenfalls an das Drehstromnetz angeschlossenen Stromrichter einer HGÜ-Anlage angeregt werden können. Die Anordnung umfasst einen Tachometergenerator mit nachgeschaltetem Bandpassfilter als Mess- und Filtereinrichtung, wobei der Tachometergenerator zum Erfassen eines Torsionsschwingungsfrequenzen des Wechselstromgenerators enthaltenden Messsignals in Form von Drehzahlvariationen einer Antriebswelle des Wechselstromgenerators ausgebildet ist und der Bandpassfilter aus dem Signal des Tachometergenerators einen Frequenzbereich, welcher dem Frequenzbereich der Torsionsschwingungen des Wechselstromgenerators entspricht, zur weiteren Verarbeitung als Messsignal im Frequenzbereich der Torsionsschwingungen herausfiltert. Dieses Messsignal wird einer nachgeordneten Korrekturvorrichtung zugeführt, durch welche Korrekturvorrichtung ein Zündwinkel des Stromrichters der HGÜ-Anlage als Steuersignal korrigiert wird, wenn in dem Messsignal Torsionsschwingungsfrequenzen enthalten sind. Durch die vorgeschlagene Anordnung der DE 30 19 952 C2 wird dabei direkt und ausschließlich der Zündwinkel des Stromrichters der HGÜ-Anlage beeinflusst.

Aus der EP 1 507 331 A2 ist eine Windkraftanlage bekannt, deren Stromgenerator über eine Wechselspannungsleitung mit dem Eingang eines Frequenzumrichters verbunden ist. Der Frequenzumrichter besteht aus zwei sogenannten Voltage Source Convertern (VSC), wobei die beiden VSCs über einen Gleichspannungskreis miteinander verbunden sind. Der Frequenzumrichter speist über einen Transformator in ein frequenzstabiles Wechselspannungsnetz ein. Zur Vermeidung von Torsionsschwingungen des Generators der Windkraftanlage wird die Drehgeschwindigkeit seines Rotors über eine Strom- und Spannungsmessung erfasst und das Messsignal gefiltert. Das gefilterte Messsignal der Drehgeschwindigkeit wird einem Sollwert für den Wirkstromanteil des Stromes aufgeschaltet, der von dem Umrichter wechselspannungsseitig bereitgestellt werden soll, der mit dem Generator verbunden ist. Auf diese Weise werden Korrosionsschwingungen wirksam bedämpft.

In der WO 98/2192 A ist eine Regelung für ein aktives Filter offenbart, das im Gleichspannungskreis einer Hochspannungsgleichstromübertragungsanlage angeordnet ist.

Aufgabe der vorliegenden Erfindung ist es, eine Einrichtung der eingangs erwähnten Art so auszubilden, dass eine Dämpfung der mechanischen Torsionsschwingungen unter Einbeziehung des Stromreglers ermöglicht ist.

Erfindungsgemäß wird diese Aufgabe bei einer Einrichtung der eingangs erwähnten Art dadurch, dass die Korrekturvorrichtung einen Phasenkorrekturfilter aufweist, der mit dem Eingang des Stromreglers des Stromrichters verbunden ist und zur Berücksichtigung einer Übertragungsfunktion des Stromreglers eingerichtet ist, der mit der Steuereinrichtung über einen Zündwinkelgeber verbunden ist.

Mittels einer derartig ausgebildeten Korrekturvorrichtung ist eine Dämpfungsregelung der mechanischen Torsionsschwingungen entgegen den Angaben in der DE 30 19 952 C2 möglich. Gemäß diesen Angaben ist eine Dämpfungsregelung über vorgeschaltete Strom- oder Leistungsregler aufgrund deren Phasendrehung nicht möglich und führt nicht zur gewünschten Dämpfung der Torsionsschwingungen.

In einer bevorzugten Ausführungsform ist der einzige Phasenkorrekturfilter ein breitbandiger Phasenkorrekturfilter. Mit einem solchen breitbandigen Phasenkorrekturfilter ist es in besonders einfacher Weise möglich, eine Dämpfung der Torsionsschwingungen zu erreichen, weil mit einer Standardparametrisierung des breitbandigen Phasenkorrekturfilters eine ausreichende Dämpfung verschiedener Torsionsschwingungen ermöglicht ist.

In einer weiteren bevorzugten Ausgestaltung ist der Phasenkorrekturfilter über ein Übertragungsglied mit dem Zündwinkelgeber verbunden, wobei die Übertragungsfunktion des Übertragungsgliedes der Übertragungsfunktion des Stromreglers entspricht. Durch eine derartige Ausbildung des weiteren Übertragungsgliedes ist eine Auswahl zwischen der Vorgabe eines Zündwinkelsollwertes oder eines Stromsollwert des Stromreglers des Stromrichters in vorteilhafter Weise möglich.

Die Erfindung betrifft des Weiteren ein Verfahren zur Dämpfungsregelung mechanischer Torsionsschwingungen eines elektrischen Wechselstromgenerators eines Drehstromnetzes, an welches ein mit einem Stromregler und einer Steuereinrichtung versehener Stromrichter einer HGÜ-Anlage angeschlossen ist, mit einer Mess- und Filtereinrichtung zur Erfassung eines Torsionsschwingungsfrequenzen des Wechselstromgenerators enthaltenden Messsignals und einer der Mess- und Filtereinrichtung nachgeordneten Korrekturvorrichtung zur Korrektur eines Steuersignals für die Steuereinrichtung des Stromrichters der HGÜ-Anlage.

Ein solches Verfahren ist aus der oben bereits behandelten deutschen Patentschrift DE 30 19 952 C2 bekannt.

Aufgabe der vorliegenden Erfindung ist es, ein solches Verfahren dahingehend weiterzubilden, dass eine präzise Dämpfungsregelung erreicht wird.

Erfindungsgemäß gelöst wird diese Aufgabe bei einem solchen Verfahren dadurch, dass mittels eines Phasenkorrekturfilters der Korrekturvorrichtung ein unter Berücksichtigung einer Übertragungsfunktion eines Stromreglers phasenkorrigiertes Signal erzeugt wird, und das phasenkorrigierte Signal über den Stromregler und/oder über ein Übertragungsglied mit einer der Übertragungsfunktion des Stromreglers entsprechenden Übertragungsfunktion einem Zündwinkelgeber zugeführt wird.

Ein solches Verfahren ist besonders vorteilhaft, weil durch die Berücksichtigung der Übertragungsfunktion des Stromreglers im Phasenkorrekturfilter ein einziger Phasenkorrekturfilter zur Zuführung des phasenkorrigierten Signals zu dem Stromregler und/oder auch dem Zündwinkelgeber ausreicht.

Die Erfindung wird im Folgenden anhand der Zeichnung und eines Ausführungsbeispiels mit Bezug auf die beiliegenden Figuren näher erläutert.

Es zeigen:
- Figur 1: eine schematische Darstellung eines Drehstromnetzes mit darin angeschlossenem Generator und Stromrichter einer HGÜ-Anlage und einem Ausführungsbeispiel einer erfindungsgemäßen Einrichtung zur Dämpfungsregelung;
- Figur 2: ein Ausführungsbeispiel einer erfindungsgemäßen Einrichtung zur Dämpfungsregelung; und
- Figur 3: ein Regelungsglied eines Ausführungsbeispiels eines Phasenkorrekturfilters der erfindungsgemäßen Einrichtung.

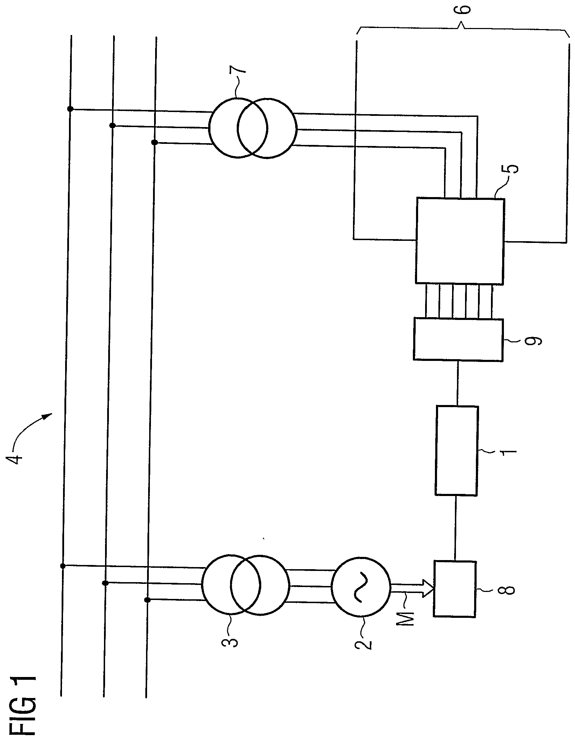

Figur 1 zeigt eine Korrekturvorrichtung 1 zur Dämpfungsregelung mechanischer Torsionsschwingungen eines elektrischen Wechselstromgenerators 2, welcher im Ausführungsbeispiel mittels eines Transformators 3 an ein dreiphasiges Drehstromnetz 4 angeschlossen ist. An das Drehstromnetz 4 ebenfalls angeschlossen ist ein Stromrichter 5 einer HGÜ-Anlage 6. Der Stromrichter 5 ist dabei wechselstromseitig ebenfalls über einen Transformator 7 an das Drehstromnetz 4 angeschlossen. Bei einer solchen Anordnung von Wechselstromgenerator 2 und Stromrichter 5 einer HGÜ-Anlage 6 können mechanische Resonanzfrequenzen von Generatorwellen des Wechselstromgenerators 2 angeregt werden, was ohne weitere Gegenmaßnahmen zum Bruch der Welle des Wechselstromgenerators 2 führen kann. Um dies zu verhindern, ist eine Mess- und Filtereinrichtung 8 vorgesehen, welche zur Erfassung eines Messsignals M in einem Frequenzbereich der Eigen- oder Resonanzfrequenzen der Torsionsschwingungen der Welle des Generators 2 eingerichtet ist. Das von der Mess- und Filtereinrichtung 8 erfasste Messsignal M wird mittels der Korrekturvorrichtung 1 in seinem Phasenfrequenzgang korrigiert und einer Steuereinrichtung 9 des Stromrichters 5 zugeführt, so dass der Stromrichter 5 derart gesteuert wird, dass keine Resonanzfrequenzen und damit keine Torsionsschwingungen des Generators angeregt werden bzw. dass die Torsionsschwingungen mittels der Korrekturvorrichtung 1 und der Steuereinrichtung 9 gedämpft sind.

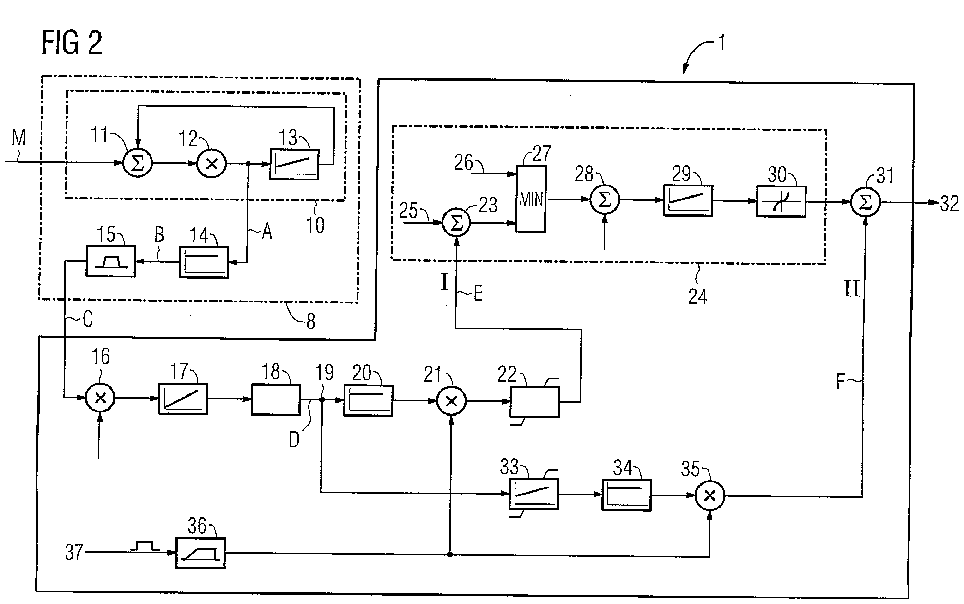

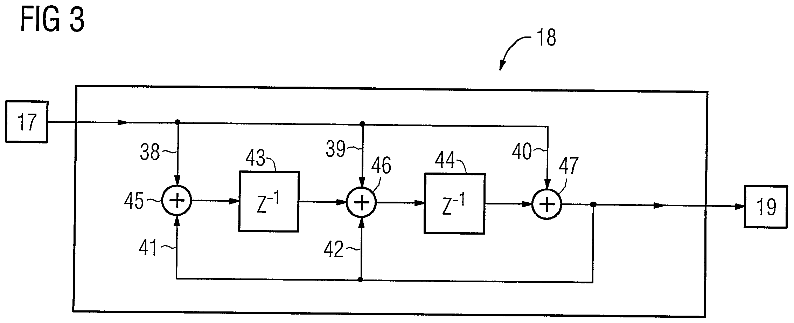

Figur 2 zeigt eine Detaildarstellung der Einrichtung zur Dämpfungsregelung mit der Mess- und Filtereinrichtung 8 und der Korrekturvorrichtung 1. Die Mess- und Filtereinrichtung 8 ist zur Erfassung und Vorverarbeitung des Messsignals M des Wechselstromgenerators 2 eingerichtet und weist dazu einen phasengekoppelten Regelkreis 10 mit Summierer 11, Multiplizierer 12 und Rückkopplungsglied 13, eine Amplitudenanpassungseinrichtung 14 sowie einen Bandpassfilter 15 auf. Die Korrekturvorrichtung 1 umfasst phasendrehende und integrierende Elemente 16 und 17 sowie einen breitbandigen Phasenkorrekturfilter 18, welcher weiter unten mit Bezug auf die Figur 3 näher erläutert wird. Ein mittels des Phasenkorrekturfilters 18 korrigiertes Signal D wird am Abzweigpunkt 19 zwei verschiedenen Regelungsstrecken zur Verfügung gestellt. Eine erste Regelungsstrecke umfasst Begrenzungs- und Verstärkungselemente 20, 21 und 22 sowie einen Summierer 23 eines Stromreglers 24 zur Steuerung des Stromrichters 5 gemäß Figur 1. Das überarbeitete Signal E wird einem Summierer 23 des Stromreglers 24 zusammen mit einem Referenzstrom 25 zugeführt. Ein Auswahlglied 27 ist ausgangsseitig über einen weiteren Summierer 28 mit einem Regelungsglied 29 verbunden. Das Regelungsglied 29 ist zur Stromregelung des Stromrichters 5 der HGÜ-Anlage 6 eingerichtet. Nach Linearisierung 30 ist ein Zündwinkelsollwertgeber 31 zur Ausgabe eines Signals an die Steuerung 9 des HGÜ-Stromrichters 5 vorgesehen.

Am Abzweigpunkt 19 ist eine zweite Regelungsstrecke vorgesehen, welche über ein Übertragungsglied 33 sowie Verstärkungs- und Koppelglieder 34 und 35 auf den Zündwinkelgeber 31 ein aus dem frequenzabhängigen Signal D gewonnenes Signal F zur Zündwinkelregelung der Thyristoren des Stromrichters 5 ausgibt. Das Übertragungsglied 33 weist dabei die gleiche Übertragungsfunktion wie der Stromregler 24 auf, und ist im Ausführungsbeispiel als PI-Regler ausgebildet.

Mit den Koppelgliedern 21 und 35 jeweils verbunden ist eine Deaktivierungseinrichtung 36, 37, welche dazu eingerichtet ist, den Phasenkorrekturfilter 8 während und kurz nach Systemfehlern mit einer geeigneten Zeitkonstanten unwirksam zu machen.

Figur 3 zeigt den breitbandigen Phasenkorrekturfilter 18 gemäß Figur 2 in einer Detaildarstellung, wobei der Phasenkorrekturfilter ein digitaler IIR-Filter zweiten Grades ist, wie er als solcher aus der Signalverarbeitung bekannt ist. Mittels geeignet eingestellter Filterkoeffizienten 38, 39, 40, 41, 42, mit welchen das Signal über die Verzögerungsglieder 43, 44 und die Addierer 45, 46, 47 und Rückkopplungen auf die Verzögerungsglieder 41, 42 bearbeitet wird, ist mit einem derartigen digitalen IIR-Filter eine breitbandige Dämpfung in dem gesamten Frequenzbereich, in welchem die die für subsynchrone Resonanzen mit Stromrichtern relevanten Torsionsschwingungen des Generators 2 liegen, möglich.

Das Verfahren zur Dämpfungsregelung wird im Folgenden näher erläutert. Der phasengekoppelte Regelkreis 10 ist zur Synchronisation des HGÜ-Stromrichters 5 auf eine Netzfrequenz des Drehstromnetzes 4 vorgesehen und ausgebildet. Dazu dient als Eingangssignal des phasengekoppelten Regelkreises 10 das Messsignal M. Beim Auftreten mechanischer Torsionsschwingungen des Wechselstromgenerators 2 sind in diesem Messsignal M die Frequenzen der Torsionsschwingungen enthalten. Das Ausgangssignal A des phasengekoppelten Regelkreises 10 entspricht dabei im Wesentlichen der Abweichung der Synchronisation des HGÜ-Stromrichters 5 von der Netzfrequenz des Drehstromnetzes 4. Der Bandpassfilter 15 ist dazu vorgesehen, ein amplitudenangepasstes Signal B auf den Bereich, in welchem die Resonanzfrequenzen der Torsionsschwingungen liegen, zu begrenzen. Dieses auf den Frequenzbereich, in welchem die Frequenzen der Torsionsschwingungen liegen, begrenzte Signal C wird der Korrekturvorrichtung 1 zugeführt, durch welche Korrekturvorrichtung 1 im Falle des Vorhandenseins von Torsionsschwingungsfrequenzen eine Dämpfung dieser Frequenzen und damit eine Dämpfung der mechanischen Torsionsschwingungen der Welle des Wechselstromgenerators 2 aus der Figur 1 veranlasst wird.
Das durch die Korrekturvorrichtung 1 und insbesondere den breitbandigen Phasenkorrekturfilter 18 korrigierte Signal D wird nach weiterer Begrenzung 20, 22 als überarbeitetes Signal E am Summierer 23 des Stromregler 24 zusammen mit einem Referenzstrom 25 dem Auswahlglied 27 zugeführt, dessen zweiter Eingang 26 mit der Steuerung 9 verbunden ist. Das Regelungsglied 29 regelt dabei anhand des von der Steuerung vorgegebenen Stromes 26 und des Referenzstromes 25 sowie des frequenzabhängigen Signals D bzw. des überarbeiteten Signals E des Phasenkorrekturfilters 18 die aus dem Drehstromnetz 4 entnommene Leistung zur Erzeugung des Stromes im HGÜ-Netz 6, indem geeignete Zündwinkel zur Ansteuerung von Thyristoren des Stromrichters 5 berechnet werden. Die berechneten Werte des Stromreglers 24 werden an einen Zündwinkelgeber 31 zur Ausgabe der Zündwinkel an die Thyristoren des Stromrichters 5 ausgegeben. Über den Stromregler 24 wird somit unter Berücksichtigung des korrigierten Signals des Phasenkorrekturfilters 18 eine indirekte Regelung und Dämpfung der Torsionsschwingungen des Generators 2 ermöglicht, weil das frequenzabhängige Signal des Phasenkorrekturfilters 18 als Eingangsgröße für die Regelstrecke des Stromreglers 24 dient.

Die Filterkoeffizienten 38, 39, 40, 41, 42 sind dabei Standardparameter, die sich aus der gegebenen Konfiguration und insbesondere aus mechanischen Eigenschaften des Wechselstromgenerators ergeben. Mit diesen Filterkoeffizienten ermöglicht das IIR-Filter 18 im Frequenzbereich zwischen 10 und 30 Hz eine Dämpfung, wobei in diesem Frequenzbereich typischerweise Torsionsschwingungsfrequenzen von Wechselstromgeneratoren liegen, die durch HGÜ Stromrichtern instabil werden können. Eine geeignete Anpassung bei kleineren oder größeren Torsionsschwingungsfrequenzen ist durch Änderung der Filterkoeffizienten 38, 39, 40, 41, 42 in einfacher Weise möglich. Mittels dieses breitbandigen Phasenkorrekturfilters 18 wird somit nicht eine spezielle Torsionsschwingungsfrequenz besonders gut gedämpft, sondern es ist vielmehr möglich, in dem gesamten Frequenzband, im Ausführungsbeispiel zwischen 10 und 30 Hz, alle darin liegenden Torsionsschwingungsfrequenzen ausreichend zu dämpfen, so dass eine Beeinflussung des Wechselstromgenerators 2 durch den Stromrichter 5 der HGÜ-Anlage 6 verhindert ist.

Das Verfahren zur Dämpfungsregelung mechanischer Torsionsschwingungen des elektrischen Wechselstromgenerators 2 des Drehstromnetzes 4, an welches der mit einer Steuereinrichtung 9 versehene Stromrichter 5 der HGÜ-Anlage angeschlossen ist, sieht somit die Mess- und Filtereinrichtung 8 zur Erfassung des Torsionsschwingungsfrequenzen des Wechselstromgenerators 2 enthaltenden Messsignals vor, und die der Mess- und Filtereinrichtung nachgeordnete Korrekturvorrichtung 1 ist zur Korrektur des Steuersignals S für die Steuereinrichtung 9 des Stromrichters für den Stromrichter 5 der HGÜ-Anlage ausgebildet. Das mittels des Phasenkorrekturfilters 18 der Korrekturvorrichtung 1 unter Berücksichtigung der Übertragungsfunktion des Stromreglers 24 phasenkorrigierte Signal wird erzeugt und über den Stromregler 24 oder über ein Übertragungsglied 34 mit einer der Übertragungsfunktion des Stromreglers 24 entsprechenden Übertragungsfunktion einem Zündwinkelgeber 31 zugeführt.

## Patentansprüche

1. Einrichtung zur Dämpfungsregelung mechanischer Torsionsschwingungen eines elektrischen Wechselstromgenerators (2) eines Drehstromnetzes (4), an welches ein mit einem Stromregler (24) und einer Steuereinrichtung (9) versehener Thyristor-Stromrichter (5) einer HGÜ-Anlage angeschlossen ist, mit einer Mess- und Filtereinrichtung (8) zur Erfassung eines Torsionsschwingungsfrequenzen des Wechselstromgenerators (2) enthaltenden Messsignals und einer der Mess- und Filtereinrichtung nachgeordneten Korrekturvorrichtung (1) zur Korrektur eines Steuersignals (S) für die Steuereinrichtung (9) des Stromrichters (5) der HGÜ-Anlage,
**dadurch gekennzeichnet, dass** die Korrekturvorrichtung (1) einen Phasenkorrekturfilter (18) aufweist, der mit dem Eingang des Stromreglers des Stromrichters verbunden ist und zur Berücksichtigung einer Übertragungsfunktion des Stromreglers (24) eingerichtet ist, der mit der Steuereinrichtung (9) über einen Zündwinkelgeber (31) verbunden ist.

2. Einrichtung nach Anspruch 1,
**dadurch gekennzeichnet, dass** der Phasenkorrekturfilter (18) ein breitbandiger Phasenkorrekturfilter (18) ist.

3. Einrichtung nach Anspruch 1 oder 2,
**dadurch gekennzeichnet, dass** der Phasenkorrekturfilter über ein Übertragungsglied (33,34) mit dem Zündwinkelgeber (31) verbunden ist, wobei die Übertragungsfunktion des Übertragungsgliedes der Übertragungsfunktion des Stromreglers (24) entspricht.

4. Verfahren zur Dämpfungsregelung mechanischer Torsionsschwingungen eines elektrischen Wechselstromgenerators (2) eines Drehstromnetzes (4), an welches ein mit einer Steuereinrichtung (9) versehener Thyristor-Stromrichter (5) einer HGÜ-Anlage angeschlossen ist, mit einer Mess- und Filtereinrichtung (8) zur Erfassung eines Torsionsschwingungsfrequenzen des Wechselstromgenerators (2) enthaltenden Messsignals und einer der Mess- und Filtereinrichtung nachgeordneten Korrekturvorrichtung (1) zur Korrektur eines Steuersignals (S) für die Steuereinrichtung (9) des Stromrichters für den Stromrichter (5) der HGÜ-Anlage,
**dadurch gekennzeichnet, dass** mittels eines Phasenkorrekturfilters der Korrekturvorrichtung ein unter Berücksichtigung einer Übertragungsfunktion eines Stromreglers phasenkorrigiertes Signal erzeugt wird, und das phasenkorrigierte Signal über den Stromregler oder über ein Übertragungsglied mit einer der Übertragungsfunktion des Stromreglers entsprechenden Übertragungsfunktion einem Zündwinkelgeber zugeführt wird.

## Claims

1. Device for damping control of mechanical torsional oscillations of an electrical alternating-current generator (2) of a three-phase power supply system (4) to which a thyristor converter (5), which is provided with a current regulator (24) and a control device (9), of an HVDCT installation is connected, having a measurement and filter device (8) for detection of a measurement signal which contains torsional oscillation frequencies of the alternating-current generator (2), and having a correction apparatus (1), which is connected downstream from the measurement and filter device, for correction of a control signal (S) for the control device (9) of the converter (5) of the HVDCT installation,
**characterized in that**
the correction apparatus (1) has a phase correction filter (18) which is connected to the input of the current regulator of the converter and is designed to take account of a transfer function of the current regulator (24), which is connected to the control device (9) via a trigger angle transmitter (31).

2. Device according to Claim 1,
**characterized in that**
the phase correction filter (18) is a broadband phase correction filter (18).

3. Device according to Claim 1 or 2,
**characterized in that**
the phase correction filter is connected to the trigger angle transmitter (31) via a transmission element (33, 34), with the transfer function of the transmission element corresponding to the transfer function of the current regulator (24).

4. Method for damping control of mechanical torsional oscillations of an electrical alternating-current generator (2) of a three-phase power supply system (4) to which a thyristor converter (5), which is provided with a control device (9), of an HVDCT installation is connected, having a measurement and filter device (8) for detection of a measurement signal which contains torsional oscillation frequencies of the alternating-current generator (2), and having a correction apparatus (1), which is connected downstream from the measurement and filter device, for correction of a control signal (S) for the control device (9) of the converter, for the converter (5) of the HVDCT installation,
**characterized in that**
a signal whose phase has been corrected taking account of a transfer function of a current regulator is produced by means of a phase correction filter in the correction apparatus, and the phase-corrected signal is supplied to a trigger angle transmitter via the current regulator or via a transmission element having a transfer function which corresponds to the transfer function of the current regulator.

## Revendications

1. Dispositif de régulation de l'amortissement d'oscillations de torsion mécanique d'un alternateur (2) électrique d'un réseau (4) à courant triphasé, auquel est raccordé un redresseur (5) de courant à thyristor, pourvu (24) de courant et d'un dispositif (9) de commande, d'une installation à courant continu à haute tension, comprenant un dispositif (8) de mesure et de filtrage pour détecter un signal de mesure comportant des fréquences d'oscillation de torsion de l'alternateur (2) et un système (1) de correction monté, en aval du dispositif de mesure et de filtrage pour corriger un signal (S) de commande du dispositif (9) de commande du redresseur (5) de courant de l'installation à courant continu à haute tension,
**caractérisé en ce que**
le système (1) de correction a un filtre (18) de correction de phase, qui est relié à l'entrée du régleur de courant du redresseur de courant et qui est conçu pour tenir compte d'une fonction de transfert du régleur (24) de courant, qui est relié au dispositif (9) de commande par un capteur (31) d'angle d'amorçage.

2. Dispositif suivant la revendication 1,
**caractérisé en ce que** le filtre (18) de correction de phase est un filtre (18) de correction de phase à bande large.

3. Dispositif suivant la revendication 1 ou 2,
**caractérisé en ce que**
le filtre de correction de phase est relié au capteur (31) d'angle d'amorçage par un organe (33, 34) de transfert, la fonction de transfert de l'organe de transfert correspondant à la fonction de transfert du régleur (24) de courant.

4. Procédé de régulation de l'amortissement d'oscillations de torsion mécaniques d'un alternateur (2) électrique d'un réseau (4) à courant triphasé, auquel est raccordé un redresseur (5) de courant à thyristor, pourvu d'un dispositif (9) de commande, d'une installation à courant continu à haute tension, comprenant un dispositif (8) de mesure et de filtrage pour détecter un signal de mesure contenant des fréquences d'oscillation de torsion de l'alternateur (2) et un système (1) de correction monté en aval du dispositif de mesure et de filtrage pour la correction d'un signal (S) de commande du dispositif (9) de commande du redresseur pour le redresseur (5) de l'installation à courant continu à haute tension,
**caractérisé en ce que**
au moyen d'un filtre de correction de phase du système de correction, on produit un signal corrigé en phase, en tenant compte d'une fonction de transfert d'un régleur de courant et **en ce que** l'on envoie, à un capteur d'angle d'amorçage, le signal corrigé en phase, par l'intermédiaire du régleur de courant ou par l'intermédiaire d'un organe de transfert ayant une fonction de transfert correspondant à la fonction de transfert du régleur de courant.
